# EUROPÄISCHE PATENTSCHRIFT

(11) **EP 0 447 361 B1**
(45) Veröffentlichungstag und Bekanntmachung des Hinweises auf die Patenterteilung: **01.06.1994**
(21) Anmeldenummer: 91810152.8
(22) Anmeldetag: 07.03.1991
(51) Int. Cl.: B29D 11/00, B29C 33/20, B29C 39/26, B29C 39/40

(54) **Kontaktlinsen-Giessform**
Mould for casting contact lenses
Moule pour couler des lentilles de contact

(30) Priorität: 16.03.1990 CH 873/90
(43) Veröffentlichungstag der Anmeldung: 18.09.1991
(73) Patentinhaber: CIBA-GEIGY AG, 4002 Basel (CH)
(72) Erfinder: Hörner, Wilhelm, W-8751 Sulzbach/M (DE); Höfer, Peter, W-8750 Aschaffenburg (DE); Hagmann, Peter, W-8759 Hösbach-Bahnhof (DE)

(56) Entgegenhaltungen:
- WO-A-87/04390
- GB-A- 2 216 065
- LU-A- 59 438

## Beschreibung

Die Erfindung betrifft eine Kontaktlinsen Giessform gemäss Oberbegriff des Patentanspruchs 1.

Kontaktlinsen werden aus verschiedensten transparenten Materialien hergestellt. Gemäss bislang verwendeten Kontaktlinsenmaterialien unterscheidet man sogenannte harte Kontaktlinsen, beispielsweise aus Polymethylmethacrylat (PMMA), und weiche quellbare Kontaktlinsen, beispielsweise solche, die Poly 2-hydroxyethylmethacrylat (P-HEMA) enthalten. In jüngerer Zeit werden auch sogenannte hart/flexible Linsen hergestellt. Dazu werden bevorzugt Materialien mit einer hohen Sauerstoffdurchlässigkeit eingesetzt, wie beispielsweise fluorhaltige Polymere. Derartige hart/flexible Kontaktlinsen werden üblicherweise auch als RGP-Kontaktlinsen bezeichnet, wobei RGP für Rigid-Gas-Permeable steht.

Harte Kontaktlinsen und RGP-Kontaktlinsen werden bislang üblicherweise durch materialabtragende Formgebung, wie Drehen auf speziellen Drehbänken oder durch Laserbearbeitung, aus Linsenrohlingen hergestellt. Dabei werden die Vorder- und Rückflächengeometrien, beispielsweise sphärische, elliptische, allgemein asphärische, einkurvige oder mehrkurvige für monofokale, bifokale, multifokale oder torische Kontaktlinsen der gewünschten Brechkraft erzeugt. Im selben Formgebungsschritt, oft aber auch hinterher, können auch Elemente zur Stabilisierung der Linse am Auge, wie ein Prismenballast, "Slab-Off"-Zonen etc. erstellt werden. Danach müssen die Linsenflächen und der Randbereich der Kontaktlinsen im allgemeinen poliert werden. Ingesamt erfordert die Herstellung von hart/flexiblen Kontaktlinsen eine grosse Anzahl von Fertigungsschritten höchster Präzision und ist sehr aufwendig und teuer.

Eine Vereinfachung des Herstellungsvorganges besteht in der Anwendung eines Einflächen-Giessform-Verfahrens. Dabei wird die Vorder- oder die Rückfläche der Kontaktlinse durch Giessen eines Monomeren-Gemisches in eine Giessform mit definierter Formgebungsfläche und anschliessendes Polymerisieren erstellt. Die noch rohe zweite Linsenfläche muss wieder durch materialabtragende Formgebung geformt werden. Auch sind noch die zusätzlichen Polierschritte und insbesondere die Randbearbeitung nötig. Die vielen Fertigungsschritte erhöhen die Produktionskosten enorm, ausserdem ist die Reproduzierbarkeit der Herstellung nur schwer zu garantieren.

Auch die sogenannten weichen Kontaktlinsen wurden ursprünglich hauptsächlich durch die beschriebene materialabtragende Formgebung oder das beschriebene Einflächen-Giessform-Verfahren hergestellt. Ihre endgültige Form und ihre hohe Flexibilität erhalten derartige weiche Kontaktlinsen durch anschliessendes Hydratisieren, wobei die Linsen je nach dem verwendeten Linsenmaterial etwa 30 %-80 % und mehr Wasser aufnehmen. Im Laufe der Zeit wurden diese Herstellungsverfahren für weiche Kontaktlinsen modifiziert, und man versuchte sogenannte Ein-Stufen-Herstellungsverfahren zu schaffen, bei denen die Kontaktlinsen und insbesondere ihre Vorder- und Rückflächengeometrien in einem Giessschritt erstellt werden. Die dazu verwendeten Giessformen sind üblicherweise zweiteilig und bestehen aus einem Patrizen und einem Matrizenteil mit entsprechend ausgebildeten Formgebungsflächen für die Kontaktlinsenvorder- und die Kontaktlinsenrückflächengeometrien. Im zusammengefügten Zustand begrenzen diese Formgebungsflächen ein definiertes Volumen, welches für die Herstellung einer Kontaktlinse mit einem flüssigen Monomer gefüllt ist.

Ein derartiges Verfahren ist beispielsweise in der GB-A-2,216,065 beschrieben. Bei diesem Verfahren werden Kontaktlinsen-Vorformlinge in speziellen Giessformen hergestellt. Diese Kontaktlinsen-Vorformlinge weisen im Idealfall bereits die gewünschten Vorder- und Rückflächengeometrien auf, jedoch wird in einem separaten Arbeitsschritt die Randbearbeitung der Kontaktlinse durchgeführt. Beide Giessformhälften weisen Anschlagelemente auf, die zur Festlegung der Endposition der zusammengesetzten Formhälften dienen. Dabei sind diese Anschlagelemente derart ausgebildet, dass sie eine Art Knickbewegung ausführen können um zum Zweck des Schwundausgleichs eine Relativbewegung der Formhälften aufeinander zu zu erlauben.

Um zu gewährleisten, dass die Geometrien der Formgebungsflächen exakt und reproduzierbar auf die Kontaktlinsenvorder- und die Kontaktlinsenrückseite übertragen werden, muss sichergestellt werden, dass die beiden zusammengefügten Formhälften sich nicht voneinander lösen oder verrücken. Auch muss eine weitgehend konstante Schliesskraft aufrechterhalten werden, so dass es zu keinen unerwünschten und undefinierbaren Verformungen der Giessformhälften kommt. Auch muss auf die beiden Formhälften ein gewisser Druck ausgeübt werden, um zu erreichen, dass sich die beiden Formhälften einander nähern, um den Schwund der Polymerisation der Kontaktlinse auszugleichen. Daher werden die zusammengefügten Giessformhälften in Klemmen eingespannt, welche die Hälften mit einer relativ genau definierten Schliesskraft zusammenpressen. Diese Klemmen erweisen sich aber bei der Polymerisation des Kontaktlinsenmaterials als nachteilig. Vielfach verhindern sie eine örtlich gleichmässige Einstrahlung des UV-Lichtes oder der Mikrowellen, mit Hilfe welcher die Polymerisation durchgeführt wird.

In der WO 87/04390 versucht man diesem Nachteil dadurch zu begegnen, dass man an eine der Formhälften Passstifte anformt, welche beim Zusammenfügen in Bohrungen der zweiten Formhälfte gleiten. Die überstehenden Passstifte werden sodann durch Heissverformen nietenartig zusammengequetscht. Abgesehen davon, dass diese Art der Fixierung der beiden Formhälften kaum eine exakte Kontrolle der Schliesskraft erlaubt, sind die beiden Formhälften nach der Polymerisation der Kontaktlinse nur umständlich voneinander zu lösen.

Aehnliche Ueberlegungen gelten für die Verfahren, bei denen die beiden Giessformhälften an ihren Rändern miteinander verschweisst werden. Auch hier müssen die Schweissstellen umständlich wieder aufgebrochen werden, um die Kontaktlinsen aus der Form zu entnehmen.

Das in der LU-A-59,438 im Zusammenhang mit der Herstellung von Fensterrahmen und dergleichen beschriebenen Verfahren, bei dem die Lage zweier Formhälften durch eine Sperrnut festgelegt ist, ist für die Herstellung von Kontaktlinsen ungeeignet. Die beiden Formhälften sind bezüglich ihrer gegenseitigen Lage u.a. mit Sperrgliedern und Hebeln versiegelt, sodass keine Relativbewegung der Formhälften mehr möglich ist. Dies verhindert aber auch einen Schwundausgleich während der Polymerisation der Kontaktlinse, diese würde sich von den Formgebungsflächen entformen und in aller Regel unbrauchbar sein.

Es besteht daher die Aufgabe eine Kontaktlinsen Giessform zu schaffen, bei der die vorstehenden Nachteile nicht auftreten. Insbesondere sollen die Giessformhälften einfach und zuverlässig zusammenfügbar und ebenso einfach wieder voneinander lösbar sein. Im zusammengefügten Zustand der Giessformhälften soll die eingeprägte Schliesskraft möglichst gut erhalten bleiben. Darüber hinaus sollen die Voraussetzungen geschaffen werden, auch harte und hart/flexible Kontaktlinsen in einem Ein-Stufen Herstellungsverfahren herzustellen. Insbesondere soll es möglich sein, die Vorderflächen- die Rückflächengeometrien und den Kontaktlinsenrand weitgehend ohne weitere Nachbearbeitung bereits im Giessverfahren in der Giessform zu erstellen. Die gewünschte Kontaktlinse soll bereits nach der Entformung in ihrer endgültigen Form vorliegen. Ausserdem soll die Giessform kostengünstig und einfach in der Herstellung sein und eine einfache Lagerungs- und Transportmöglichkeit für die Kontaktlinsen bieten. Darüber hinaus sollen die Formgebungsflächen der Giessformhälften möglichst vor Kratzern und Beschädigungen geschützt sein.

Die Lösung dieser Aufgaben erfolgt durch die Ausbildung einer Kontaktlinsen-Giessform gemäss Kennzeichen des Patentanspruchs 1. Weitere besonders vorteilhafte Ausbildungen sind Gegenstand der abhängigen Patentansprüche.

Im folgenden wird die Erfindung anhand der Zeichnungen näher erläutert. Es zeigen in zum Teil schematisierter Darstellung:
Fig. 1 eine zusammengesetzte Kontaktlinsen-Giessform im Querschnitt,
Fig. 2 den Berührungsbereich der beiden Giessformhälften in vergrössertem Massstab und
Fig. 3 und 4 Ausführungsbeispiele für Kontaktlinsen-Lagerungs- und Transportbehälter.

Eine im ganzen mit 100 bezeichnete Kontaktlinsen-Giessform umfasst zwei Giessformhälften, ein Matrizenteil 1 und ein Patrizenteil 2. Das Matrizenteil 1 besitzt eine im wesentlichen hutartige Gestalt, mit einem etwa zylinderförmigen Körperteil 10 mit einer Deckfläche. Das zylindrische Körpterteil 10 weist einen flanschartigen Ansatz 12 auf, der zugleich als Auflagefläche für das Matrizenzteil dient. Die Aussenfläche der Deckfläche stellt eine konkave Formgebungsfläche 11 dar, welche die Geometrie der Frontfläche einer herzustellenden Kontaktlinse bestimmt.

Angrenzend an die konkave Formgebungsfläche 11 weist die Deckfläche des zylindrischen Körperteils 10 eine etwa waagrecht verlaufende Schulter 13 auf. Eine nach aussen schräg abfallende Fläche 14 bildet das Verbindungsstück zwischen der Schulter 13 und der vertikalen Aussenwandung des zylindrischen Körperteils 10. Vom Ansatzstück 12 ausgehend bis etwa in halbe Höhe des Körperteils 10 reichend sind Fixierelemente 15 an der Aussenwandung des zylindrischen Körperteils 10 vorgesehen, welche im dargestellten Ausführungsbeispiel rippenartig ausgebildet sind. Insbesondere reichen diese rippenartigen Fixierelemente 15 bis kurz unterhalb der abgeschrägten Fläche. Vorzugsweise sind die rippenartigen Fixierelemente 15 axial und symmetrisch entlang des Umfangs der Aussenwandung des zylindrischen Körperteils angeordnet. Anstatt rippenartiger Fixierelemente 15 könnten auch anders ausgebildete Fixierelemente vorgesehen sein, beispielsweise ein einziges umlaufendes zylindrisches Fixierelement.

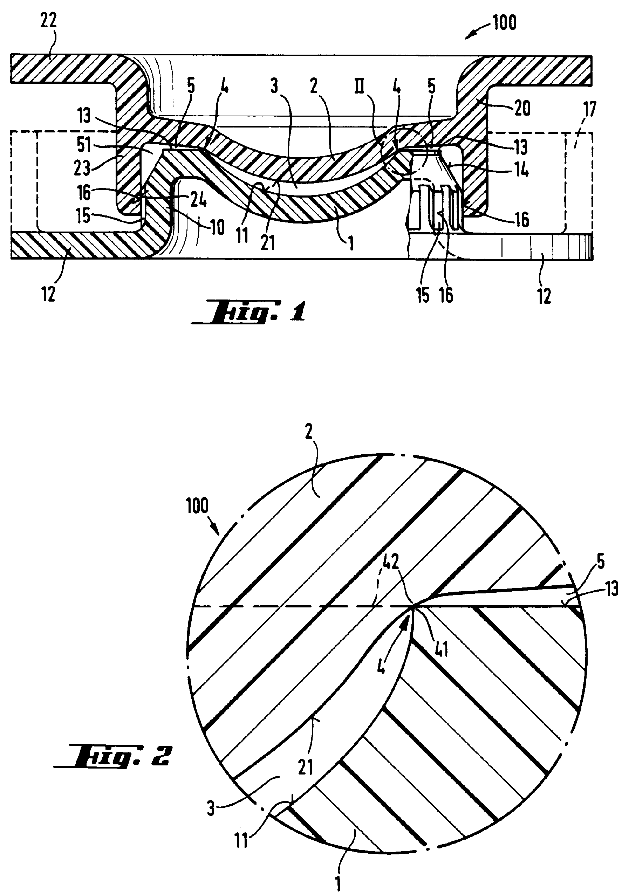

In Fig. 1 ist noch ein Schutzzylinder 17 strichliert angedeutet, der sich ausgehend vom Ansatz 12 bis über das Niveau der waagrecht verlaufenden und die konkave Formgebungsfläche 11 begrenzenden Schulter 13 erstreckt. Auf diese Art ausgebildet, schützt dieser umlaufende Schutzzylinder 17 die konkave Formgebungsfläche 11 und insbesondere den besonders empfindlichen Uebergangsbereich 4 zwischen der konkaven Formgebungsfläche 11 und der Schulter 13 vor jeglicher Beschädigung bei der Lagerung und der Handhabung des Matrizenteils 1. Der Schutzzylinder 17 kann zylinderförmig umlaufend oder auch unterbrochen ausgebildet sein. Er kann am Umfang des Ansatzes 12 oder in radialer Richtung weiter innen angeordnet sein.

Das Patrizenteil 2, die männliche Giessformhälfte, weist eine hutähnliche Form mit einer konvex ausgebildeten Formgebungsfläche auf. Diese konvexe Formgebungsfläche 21 definiert die Geometrie der Rückfläche der herzustellenden Kontaktlinse. Das Patrizenteil weist ein flanschartiges Ansatzstück 22 auf. Von diesem flanschartigen Ansatzstück 22 aus erstreckt sich ein etwa zylindrisches Hutteil 20, dessen Deckfläche die konvexe Formgebungsfläche 21 für die Kontaktlinsenrückfläche aufweist. Ein flanschartiger zylindrischer Fortsatz 23 steht über das Niveau des Scheitelpunktes der konvexen Formgebungsfläche 21 hinaus. Der zylindrische Fortsatz 23 schützt die konvexe Formgebungsfläche 21 vor Beschädigungen bei der Lagerung und Handhabung des Patrizenteils 2.

Der zylindrische Fortsatz 23 dient im Zusammenwirken mit den Fixierelementen 15 als Fixierung für die beiden zusammengefügten Giessformhälften 1 und 2. Insbesondere ist der Innendurchmesser des zylindrischen Fortsatzes 23 derart bemessen, dass er nur unter Aufwendung einer gewissen Schliesskraft über die rippenartigen Fixierelemente 15 gestülpt werden kann. Die sodann aneinanderliegenden Aussenflächen 16 der rippenartigen Fixierelemente 15 und die Innenfläche 24 des zylindrischen Fortsatzes 23 haften durch Kraftschluss und halten die beiden zusammengefügten Giessformhälften 1 und 2 in der korrekten Position. Auf diese Weise bleibt die Schliesskraft nach dem Schliessen der Giessformhälften erhalten, ohne dass zusätzliche Schliessvorrichtungen wie z.B. Platten mit eingebauten Schliessfedern oder Klemmen erforderlich wären. Dies erleichtert ganz entscheidend die Handhabung der erfindungsgemässen Giessformen nach dem Schliessen, beispielsweise das automatisierte Einbringen der Giessformen 100 in eine Polymerisationsvorrichtung mit Röntgen-, Ultraviolett-, Infrarot- oder Mikrowellenstrahlung. Besonders vorteilhaft ist, dass die Ultraviolett- oder die Mikrowelleneinstrahlung von beiden Seiten und ungehindert durch irgendwelche externe Schliessvorrichtungen erfolgen kann. Bei Giessformhälften, bei denen das Matrizenteil 1 einen Schutzzylinder 17 aufweist, ist dieser vorzugsweise in einem solchen Abstand von der Aussenwandung des zylindrischen Körperteils 10 angeordnet, dass ein enger Ringspalt freibleibt, in den der zylindrische Fortsatz 23 des Patrizenteils 2 einsteckbar und einklemmbar ist. Der Kraftschluss erfolgt sodann nicht nur an den aneinanderliegenden Aussenflächen der Fixierelemente 15 und der Innenfläche des zylindrischen Fortsatzes 23, sondern auch an der aneinanderliegenden Aussenfläche des zylindrischen Fortsatzes 23 und der Innenfläche des Schutzzylinders 17. Zugleich kann der derart angeordnete Schutzzylinder 17 auch als automatisch wirkende Justierhilfe beim Zusammenfügen der beiden Giessformhälften 1 und 2 dienen.

Das zusammengefügte Matrizen- 1 und das Patrizenteil 2 erleiden im Bereich des Ueberganges 4 zwischen der konkaven Formgebungsfläche 11 und der waagrechten Schulter 13 einen linienförmigen Kontakt. In Fig. 2 ist dieser Abschnitt der beiden zusammengefügten Giessform-Hälften in vergrössertem Massstab dargestellt. Der zwischen den beiden Giessformhälften verbleibende Zwischenraum 3 definiert die Form der herzustellenden Kontaktlinse. Im zusammengefügten Zustand liegt im Bereich 4 die Kante 41 auf der konvexen Formgebungsfläche des Patrizenteils 2 auf. Inbesondere ergibt sich eine linienförmige Auflage 42. Die Kante 41 kann, wie dargestellt, leicht abgerundet sein. Im Anschluss an die linienförmige Auflage 42 verbleibt ein sich radial nach aussen erweiternder Kanal 5 zwischen den beiden Giessformhälften, der in einen Ringraum 51 mündet, der von den beiden Giessformhälften 1 und 2 begrenzt ist. Das Volumen des Ringraumes 51 ist dabei derart bemessen, dass es überschüssiges flüssiges Monomer, das beim Schliessen der beiden Formhälften 1 und 2 verdrängt wird, leicht aufnehmen kann.

Zur Herstellung einer Kontaktlinse wird ein flüssiges Monomeren-Gemisch in das Matrizenteil 1 eingefüllt. Daraufhin wird das Patrizenteil auf das Matrizenteil gesteckt. Ueberschüssiges Monomeren-Gemisch, das beim Zusammenstecken der Formhälften verdrängt wird, kann dabei durch den Kanal 5 in den Ringraum 51 abfliessen. Die Schliesskraft mit der die beiden Formhälften 1 und 2 manuell oder automatisch zusammengepresst werden, verteilt sich in den Kraftschluss , welcher allein ein Aneinanderhaften der beiden Formhälften ohne zusätzlich externe Schliessmittel bewirkt, und in eine Flächenpressung des eingeschlossenen Monomeres. Ausserdem können die Formhälften im Bereich der linienförmigen Auflage 42 nach Massgabe der eingeprägten Schliesskraft eine geringe Verformung erleiden. Während des Polymerisationsvorganges, welcher vorzugsweise durch beidseitig eingestrahlte Ultraviolett- oder Mikrowellenstrahlung ausgelöst wird, erleidet das zwischen den beiden Giessformhälften eingeschlossene Monomervolumen 3 einen gewissen Schwund, der bis zu 20 % betragen kann. Durch diesen Volumensschwund des Kontaktlinsenmaterials verringert sich der Gegendruck, den das Kontaktlinsenmaterial als Folge der Flächenpressung auf die beiden Giessformhälften 1 und 2 ausübt. Dadurch erhöht sich der Auflagedruck im Bereich der linienförmigen Auflage 42. Dies hat eine grössere Deformation der Formhälften 1 und 2 im Bereich der linienförmigen Auflage 42 zur Folge. Auf diese Weise nähern sich die beiden Formgebungsflächen 11 und 21 ohne ihre Geometrie zu verändern gerade soweit, um den Volumensschwund des Kontaktlinsenmaterials, bei der Polymerisation auszugleichen. Unterstützt wird dieser Vorgang auch noch durch Grenzflächenkräfte zwischen dem Kontaktlinsenmaterial, dem Monomer, und den Formgebungsflächen 11 bzw. 21, welche einer Entformung der polymerisierenden Kontaktlise entgegenwirken. Die dabei entstehenden Zugkräfte erhöhen gleichfalls den Auflagedruck im Bereich der linienförmigen Auflage 42. Durch Wahl eines Kontaktlinsenmaterials, welches als Monomer nicht jedoch als Polymer eine besonders hohe Affinität zum Material der Giessform besitzt, wird dieser unterstützende Effekt noch deutlich erhöht. Nach der Polymerisation werden die beiden Giessformhälften wieder getrennt und die fertige Kontaktlinse mit einwandfreien Vorder- und Rückflächen und insbesondere mit meist einwandfreiem Rand ohne sogenannte Schwimmkante kann entnommen werden. Durch die besondere Ausbildung des Ringraumes 51 kann überschüssiges Material, das noch nicht vollständig polymerisiert ist nur nach aussen abfliessen, und es besteht beim Oeffnen der Giessform keine Gefahr, dass noch flüssiges Material über die fertige Kontaktlinse läuft und diese unbrauchbar macht.

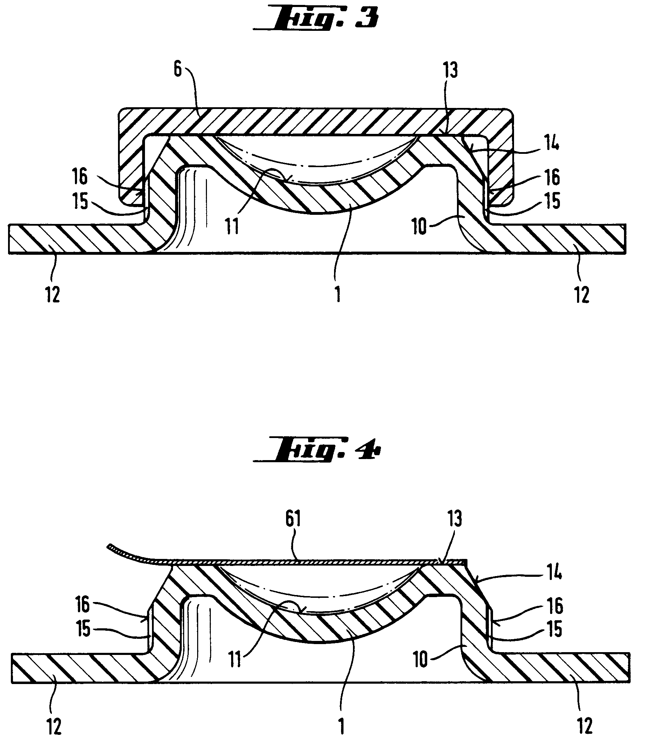

In einer bevorzugten Ausführungsvariante kann das Matrizenteil auch als Hydratisierungsbehälter und insbesondere auch gleich als Aufbewahrungs- und Transportbehälter für die hergestellte Kontaktlinse verwendet werden. Dazu genügt es, wie in Fig. 3 dargestellt, eine Art Verschlussdeckel 6 über das Matrizenteil 1 zu stülpen, wobei das Aneinanderhaften des Deckels 6 und des Matrizenteils 1 wiederum durch Kraftschluss zwischen der Deckelinnenfläche und den rippenartigen Verschlusselementen 15 erfolgt. Vorzugsweise ist der Deckel aus Polypropylen und wird im Spritzgiessverfahren hergestellt. Selbstverständlich könnte auch eine aufreissbare Verschlussfolie 61 auf das waagrechte Flächenstück 13 aufgeklebt oder beispielsweise im Heisssiegelverfahren aufgebracht werden, wie dies am Ausführungsbeispiel gemäss Fig. 4 dargestellt ist. Vorzugsweise ist die Verschlussfolie eine kunststoffkaschierte Aluminiumfolie.

Die Herstellung der beiden Giessformhälften 1 und 2 erfolgt üblicherweise im Spritzgiessverfahren. Als Formenmaterial wird thermoplastisches Material, vorzugsweise Polypropylen verwendet. Die Dicken des Formenmaterials liegen zwischen 0,5 mm und 3 mm, vorzugsweise bei etwa 1,5 mm. Insbesondere wird bei der Gestaltung der Giessformen darauf geachtet, dass alle für die Herstellung der Kontaktlinsen relevanten Formteile, beispielsweise diejenigen Bereiche der Giessformhälften, die die Formgebungsflächen aufweisen, etwa die gleiche Wandstärke haben. Insbesondere wird dafür Sorge getragen, dass keine Formteile eine zu geringe Wandstärke aufweisen. Damit wird eine gleichmässige Formfüllung beim Spritzgiessen und ein gleichmässiges Abkühlen der Formen sichergestellt, womit die hohe Anforderung an die Formtreue der Formen erfüllt wird.

Die Herstellung der Giessformhälften im Spritzgiessverfahren erlaubt auch das Vorsehen von Formgebungselementen für dynamische Stabilisierung der Kontaktlinse, wie beispielsweise Prismenballast, Slab-Off-Zonen etc. in den Giessformen.

Die selbsttätig die Verschlusskraft aufrecht erhaltenden Schliessmittel, rippenartige Verschlusselemente 15 und zylindrischer Fortsatz 23, können auch dazu ausgebildet werden, die beiden Giessformhälften 1 und 2 in ganz bestimmten Orientierungen zusammenzufügen. Beispielsweise könnte ein rippenartiges Verschlusselement weiter über den Umfang hervorspringen und an entsprechender Stelle in der Innenwandung 24 des zylindrischen Fortsatzes 23 eine Nut vorgesehen sein. Auf diese Weise ist gewährleistet, dass die beiden Giessformhälften nur in einer ganz bestimmten gegenseitigen Orientierung, wenn das höhere Verschlusselement mit der Nut in Deckung ist, zusammengesteckt werden können. Mit Hilfe derartig modifizierter Giessformhälften können beispielsweise auch torische Linsen zuverlässig hergestellt werden. Auch die Ausbildung der flanschartigen Ansätze 12 bzw. 22 an den Giessformhälften bietet eine Reihe von zusätzlichen Vorteilen. So erlauben die Ansätze ein einfaches Manipulieren, sie dienen als Standfläche für die jeweilige Giessformhälfte, auch können darauf Kennzeichen und Sortierhilfen, beispielsweise ein Barcode, zur einfacheren Kennzeichnung angebracht werden, und schliesslich können auch Justiermarken vorgesehen sein. Darüber hinaus bieten die Ansätze eine Schutzfunktion für die Formhälften bei der Lagerung und der Magazinierung in automatisierte Fabrikationsanlagen.

Insgesamt erlaubt die erfindungsgemässe Ausbildung der Kontaktlinsen-Giessformen eine einfache Herstellung von weichen Kontaktlinsen, aber insbesondere auch von harten und hart/flexiblen Kontaktlinsen mit fehlerfreien Front- und Rückflächen und mit einwandfreiem Rand. Die Giessformen sind einfach und billig in der Herstellung, einfach zu lagern und zu handhaben und können überdies sogar als Lagerungs- und Transportbehälter für fertige Kontaktlinsen verwendet werden.

## Patentansprüche

1. Kontaktlinsen Giessform mit zwei Giessformhälften, einem Matrizenteil (1) mit einer konkaven Formgebungsfläche (11) und einem Patrizenteil (2) mit einer konvexen Formgebungsfläche (21), welche im zusammengefügten Zustand ein abgeschlossenes Volumen (3) begrenzen, dessen Begrenzugsflächen durch die beiden Formgebungsflächen (11, 21) gebildet sind, dadurch gekennzeichnet, dass die beiden zusammengefügten Giessformhälften (1, 2) einander im zusammengefügten Zustand entlang einer Linie berühren und allein durch Kraftschluss aneinander haften.

2. Kontaktlinsen Giessform nach Anspruch 1, dadurch gekennzeichnet, dass an der Aussenseite des Matrizenteils (1) vorzugsweise rippenartig ausgebildete Fixierelemente (15) und am Patrizenteil (2) ein zylindrischer überstehender Fortsatz (23) vorgesehen sind, und dass der Kraftschluss zwischen der Aussenfläche (16) der Fixierelemente (15) und der Innenfläche (24) des Fortsatzes (23) erfolgt.

3. Kontaktlinsen Giessform nach Anspruch 2, dadurch gekennzeichnet, dass der zylindrische Fortsatz (23) das Niveau der konvexen Formgebungsfläche (21) überragt.

4. Kontaktlinsen Giessform nach einem der vorangehenden Ansprüche, dadurch gekennzeichnet, dass das Matrizen- (1) und das Patrizenteil (2) jeweils an ihren den Formgebungsflächen (11, 21) gegenüberliegenden Seiten flanschartige Ansätze (12 bzw. 22) aufweisen.

5. Kontaktlinsen Giessform nach Anspruch 4, dadurch gekennzeichnet, dass sich ausgehend vom flanschartigen Ansatz (12) des Matrizenteils (1) ein Schutzzylinder (17) über das höchste Niveau der konkaven Formgebungsfläche (11) erstreckt.

6. Kontaktlinsen Giessform nach Anspruch 1, dadurch gekennzeichnet, dass im Anschluss an die Berührungslinie (42) der Giessformhälften (1 und 2) wenigstens ein Kanal (5) vorgesehen ist, der in einen von den beiden Giessformhälften (1 und 2) begrenzter Ringraum (51) mündet.

7. Kontaktlinsen Giessform nach einem der vorangehenden Ansprüche, dadurch gekennzeichnet, dass die Giessformhälften aus thermoplastischem Material, vorzugsweise aus Polypropylen sind.

8. Kontaktlinsen Giessform nach Anspruch 1, dadurch gekennzeichnet, dass die Dicke der Giessformhälften (1 oder 2) im Bereich der Formgebungsflächen (11 oder 21) von etwa 0,5 mm bis etwa 3 mm, vorzugsweise etwa 1,5 mm beträgt.

9. Kontaktlinsen Giessform nach einem der vorangehenden Ansprüche, dadurch gekennzeichnet, dass das Matrizenteil (1) als Lagerungs- und Transportbehälter für die darin hergestellte Kontaktlinse verwendet wird.

10. Kontaktlinsen Giessform nach Anspruch 9, dadurch gekennzeichnet, dass das Matrizenteil (1) einen lösbaren Verschlussdeckel (6) aufweist, der durch Kraftschluss haftet.

11. Kontaktlinsen Giessform nach Anspruch 10, dadurch gekennzeichnet, dass der Verschlussdeckel (6) aus Polypropylen ist.

12. Kontaktlinsen Giessform nach Anspruch 9, dadurch gekennzeichnet, dass das Matrizenteil (1) mit einer ablösbaren Folie, vorzugsweise einer kunststoffkaschierten Aluminiumfolie verschlossen ist.

13. Kontaktlinsen Giessform nach einem der vorangehenden Ansprüche, dadurch gekennzeichnet, dass die Giessform zur Herstellung von weichen Kontaktlinsen, beispielsweise von Kontaktlinsen die Poly 2-hydroxyethylmethacrylat enthalten, verwendet wird.

14. Kontaktlinsen Giessform nach einem der Ansprüche 1-12, dadurch gekennzeichnet, dass die Giessform zur Herstellung von harten Kontaktlinsen, beispielsweise von Kontaktlinsen aus Polymethylmethacrylat, verwendet wird.

15. Kontaktlinsen Giessform nach einem der Ansprüche 1-12, dadurch gekennzeichnet, dass die Giessform zur Herstellung von hart/flexiblen bzw. RGP-Kontaktlinsen verwendet wird.

16. Kontaktlinsen Giessform nach einem der Ansprüche 13-15, dadurch gekennzeichnet, dass die Giessform zur Ein-Stufen Herstellung von nachbearbeitungsfreien Kontaktlinsen verwendet wird.

## Claims

1. A contact lens casting mould comprising two casting mould halves, a female part (1) having a concave shaping surface (11) and a male part (2) having a convex shaping surface (21), which, when joined together, define a closed volume (3) the bounding surfaces of which are formed by the two shaping surfaces (11, 21), wherein, in the joined state, the two joined casting mould halves (1, 2) are in contact with each other along a line and adhere to each other solely by frictional connection.

2. A contact lens casting mould according to claim 1, wherein fixing elements (15) of preferably rib-like construction are provided on the outside of the female part (1) and a cylindrical projecting extension (23) is provided on the male part (2), and the frictional connection is made between the outer surface (16) of the fixing elements (15) and the inner surface (24) of the extension (23).

3. A contact lens casting mould according to claim 2, wherein the cylindrical extension (23) projects beyond the level of the convex shaping surface (21).

4. A contact lens casting mould according to any one of the preceding claims, wherein the female part (1) and the male part (2) each have flange-like projecting pieces (12, 22) at the sides thereof opposite the shaping surfaces (11 and 21, respectively).

5. A contact lens casting mould according to claim 4, wherein a protective cylinder (17) extends from the flange-like projecting piece (12) of the female part (1) and beyond the highest level of the concave shaping surface (11).

6. A contact lens casting mould according to claim 1, wherein, adjoining the line of contact (42) of the casting mould halves (1 and 2), at least one channel (5) is provided which opens into an annular space (51) defined by the two casting mould halves (1 and 2).

7. A contact lens casting mould according to any one of the preceding claims, wherein the casting mould halves consist of a thermoplastic material, preferably polypropylene.

8. A contact lens casting mould according to claim 1, wherein the thickness of the casting mould halves (1 or 2) in the region of the shaping surfaces (11 or 21) is from approximately 0.5 mm to approximately 3 mm, preferably approximately 1.5 mm.

9. A contact lens casting mould according to any one of the preceding claims, wherein the female part (1) is used as a storage and transport container for the contact lens manufactured therein.

10. A contact lens casting mould according to claim 9, wherein the female part (1) has a detachable sealing cap (6) which adheres by frictional connection.

11. A contact lens casting mould according to claim 10, wherein the sealing cap (6) consists of polypropylene.

12. A contact lens casting mould according to claim 9, wherein the female part (1) is sealed with a detachable foil, preferably a plastics-lined aluminium foil.

13. A contact lens casting mould according to any one of the preceding claims, wherein the casting mould is used for the manufacture of soft contact lenses, for example contact lenses comprising poly-2-hydroxyethylmethacrylate.

14. A contact lens casting mould according to any one of claims 1 to 12, wherein the casting mould is used for the manufacture of hard contact lenses, for example contact lenses consisting of polymethylmethacrylate.

15. A contact lens casting mould according to any one of claims 1 to 12, wherein the casting mould is used for the manufacture of hard/flexible or RGP contact lenses.

16. A contact lens casting mould according to any one of claims 13 to 15, wherein the casting mould is used for the one-step manufacture of contact lenses which require no subsequent finishing.

## Revendications

1. Moule de coulée de lentilles de contact comportant deux moitiés de moule, à savoir une partie-matrice (1) pourvue d'une surface concave de formage (11) et une partie-patrice (2) pourvue d'une surface convexe de formage (21), qui délimit»ent dans l'état assemblé un volume fermé (3) dont les surfaces de délimitation sont constituées par les deux surfaces de formage (11, 21), caractérisé en ce que les deux moitiés de moule assemblées (1, 2) sont en contact mutuel dans l'état assemblé le long d'une ligne et adhèrent l'une avec l'autre uniquement par conjugaison de forces.

2. Moule de coulée de lentilles de contact selon la revendication 1, caractérisé en ce qu'il est prévu sur le côté extérieur de la partie-matrice (1) des éléments de fixation (15) agencés avantageusement en forme de nervures et il est prévu sur la partie-patrice (2) un appendice cylindrique (23) en saillie et en ce que la conjugaison des forces s'effectue entre la surface extérieure (16) des éléments de fixation (15) et la surface intérieure (24) de l'appendice (23).

3. Moule de coulée de lentilles de contact selon la revendication 2, caractérisé en ce que l'appendice cylindrique (23) dépasse du niveau de la surface convexe de formage (21).

4. Moule de coulée de lentilles de contact selon une des revendications précédentes, caractérisé en ce que la partie-matrice (1) et la partie-patrice (2) comportent chacune des appendices en forme de collerettes (12, 22) sur leurs côtés opposés aux surfaces de formage (11, 21).

5. Moule de coulée de lentilles de contact selon la revendication 4, caractérisé en ce que, à partir de l'appendice (12) en forme de collerette de la partie-matrice (1) un cylindre de protection (17) s'étend au-dessus du niveau le plus haut de la surface concave (11).

6. Moule de coulée de lentilles de contact selon la revendication 1, caractérisé en qu'il est prévu à la suite de la ligne de contact (42) des moitiés (1 et 2) du mule de coulée au moins un canal (5) qui débouche dans un espace annulaire (51) délimité par les deux moitiés (1 et 2) du moule de coulée.

7. Moule de coulée de lentilles de contact selon une des revendications précédentes, caractérisé en ce que les moitiés du moule de coulée sont formées d'une matière thermoplastique, de préférence de polypropylène.

8. Moule de coulée de lentilles de contact selon la revendication 1, caractérisé en ce que l'épaisseur des moitiés (1 ou 2) du moule de coulée est comprise, dans la zone des surfaces de formage (11 ou 21) entre environ 0,5 et environ 3mm, en étant de préférence d'environ 1,5 mm.

9. Moule de coulée de lentilles de contact selon une des revendications précédentes, caractérisé en ce que la partie-matrice (1) est utilisée comme un récipient de stockage et de transport pour la lentille de contact fabriquée dans celle-ci.

10. Moule de coulée de lentilles de contact selon la revendication 9, caractérisé en ce que la partie-matrice (1) comporte un couvercle de fermeture (6) séparable, qui adhère par conjugaison de forces.

11. Moule de coulée de lentilles de contact selon la revendication 10, caractérisé en ce que le couvercle de fermeture (6) est formé de polypropylène.

12. Moule de coulée de lentilles de contact selon la revendication 9, caractérisé en ce que la partie-matrice (1) est fermée par une feuille détachable, de préférence une feuille d'aluminium revêtue de matière plastique.

13. Moule de coulée de lentilles de contact selon une des revendications précédentes, caractérisé en ce que le moule de coulée est utilisé pour la fabrication de lentilles de contact molles, par exemple de lentilles de contact qui contiennent du poly 2-hydroxyéthylméthacrylate.

14. Moule de coulée de lentilles de contact selon les revendications 1 à 12, caractérisé en ce que le moule de coulée est utilisé pour la fabrication de lentilles de contact dures, par exemple de lentilles de contact en polyméthylméthacrylate.

15. Moule de coulée de lentilles de contact selon une des revendications 1 à 12, caractérisé en ce que le moule de coulée est utilisé pour la fabrication de lentilles de contact dures/flexibles ou de lentilles de contact RGP.

16. Moule de coulée de lentilles de contact selon une des revendications 13 à 15, caractérisé en ce que le moule de coulée est utilisé pour la fabrication en une étape de lentilles de contact exemptes d'usinage de finition.
